# FASCICULE DE BREVET EUROPEEN

(11) **EP 1 629 697 B1**
(45) Date de publication et mention de la délivrance du brevet: **22.11.2006**
(21) Numéro de dépôt: 04767180.5
(22) Date de dépôt: 26.05.2004
(51) Int. Cl.: H05B 3/84

(54) **ELEMENT EN PLAQUE AVEC UN CHAUFFAGE EN COUCHE**
PLATTENELEMENT FÜR GESCHICHTETE ERWÄRMUNG
PLATE ELEMENT WITH LAYERED HEATING

(30) Priorité: 05.06.2003 DE 10325476
(43) Date de publication de la demande: 01.03.2006
(73) Titulaire: SAINT-GOBAIN GLASS FRANCE, 92400 Courbevoie (FR)
(72) Inventeur: HAUSER, Hubert, 52146 Würselen (DE)
(74) Mandataire: Aupetit, Muriel J. C.
(86) Numéro de dépôt international: PCT/FR2004/001302
(87) Numéro de publication internationale: WO 2005/004539

(56) Documents cités:
- DE-A- 4 216 376
- DE-A- 10 033 336
- US-A- 5 932 128
- US-B1- 6 365 876

## Description

L'invention se rapporte à un élément en plaque avec un chauffage en couche avec les caractéristiques du préambule de la revendication 1.

Il est connu d'une façon générale que des systèmes de couches minces électriquement conducteurs peuvent être utilisés comme résistances de chauffage en leur appliquant une tension électrique. Il existe de multiples applications de cette technique aussi bien dans l'industrie automobile que dans le bâtiment.

Elle est souvent utilisée pour débarrasser des vitres de fenêtre ou des miroirs de la buée ou de la glace, afin que l'on puisse voir aisément au travers. De tels éléments en plaque peuvent cependant aussi être installés sur des murs dans ou sur des bâtiments au lieu de corps de chauffage habituels ou être intégrés dans ceux-ci. A cet effet, ils ne doivent pas obligatoirement être réalisés sous forme de fenêtres, mais ils peuvent l'être sous forme de miroirs, surfaces décoratives, etc. Le cas échéant, il est également possible d'utiliser de tels éléments en plaque de façon générale pour la production de chaleur en surface dans des appareils techniques, par exemple dans des appareils électroménagers, où leur faible épaisseur et leurs surfaces lisses peu salissantes et très faciles à nettoyer peuvent offrir de grands avantages.

En général, ces systèmes de couches déposés sur des substrats plats, par exemple des vitres, comprennent au moins une couche métallique, par exemple en argent, ainsi que (dans les systèmes de couches transparents) des couches diélectriques sur les deux faces de la couche d'argent, éventuellement aussi des couches de blocage en matériaux très divers, parfois aussi des couches de recouvrement destinées à augmenter la résistance mécanique de la structure stratifiée. Dans de nombreux cas, on exploite aussi les propriétés de réflexion du rayonnement infrarouge de ces systèmes de couches comme isolation thermique.

L'utilisation de tels chauffages en couches nécessite des tensions électriques relativement élevées. En particulier au bord de la vitre concernée, le cas échéant complètement revêtue, il faut prévoir une isolation électrique sûre.

Les caractéristiques d'origine sont divulguées dans le document DE-A1-40 11 541 sous la forme d'une vitre d'alarme trempée à chauffage électrique. A l'aide d'une ligne de séparation tracée par un faisceau laser, une zone partielle du revêtement électriquement conducteur chauffant de cette vitre est électriquement séparée de la zone de surface principale du revêtement. La zone partielle est utilisée comme capteur pour détecter le bris de la vitre trempée concernée. Celle-ci peut être montée dans une vitre feuilletée ou aussi dans un vitrage isolant. De préférence, on utilise un système de couches qui peut supporter une charge thermique importante et qui peut déjà être déposé sur sa surface avant la trempe de la vitre.

Des caractéristiques d'origine sont également divulguées dans la demande de brevet allemand 102 08 552.8, dans laquelle on décrit un tel élément de chauffage en plaque à utiliser avec une tension de réseau. Pour l'isolation du bord extérieur de l'élément en plaque, une surface partielle est séparée électriquement de la zone de surface du revêtement à alimentation électrique de chauffage par au moins une ligne de coupe périphérique et est neutralisée sans raccordement électrique.

Le brevet US 3 892 947 décrit un élément en plaque en matière fragile, pourvu d'un revêtement de chauffage, dans lequel un ruban conducteur destiné à l'arrivée du courant s'étend le long de presque tout le pourtour extérieur de l'élément. On vise ainsi l'objectif de couper l'arrivée du courant par une interruption locale dudit ruban conducteur en cas de rupture de l'élément en plaque.

L'invention a pour objet d'indiquer une nouvelle utilisation de la surface partielle séparée d'un élément en plaque avec un chauffage en couches de ce type.

Conformément à l'invention, ce problème est résolu par les caractéristiques de la revendication 1. Les caractéristiques des revendications dépendantes présentent des formes de réalisation avantageuses de cet objet.

En reliant la surface partielle à un potentiel de mise à la terre, on réalise une protection encore plus élevée, par son isolation électrique simple, par rapport au champ de chauffage proprement dit. Ceci peut s'avérer intéressant en particulier lors de l'utilisation du champ de chauffage avec des tensions relativement élevées (par exemple une tension de réseau national usuelle de 110 ou 230 V).

La surface partielle et le revêtement chauffant peuvent en principe être réalisés indépendamment l'un de l'autre et même avec des matériaux conducteurs différents. Il serait par exemple possible de réaliser le revêtement chauffant de façon connue sous forme de système de couches transparent, et la surface partielle au contraire avec une encre conductrice imprimée (par exemple une pâte de sérigraphie à haute teneur en argent), où les deux doivent être soigneusement séparés l'un de l'autre par une haute résistance électrique/galvanique. On pourrait également prévoir un ruban conducteur, du type connu par le brevet US précité, comme conducteur de protection à proximité du bord sur ou dans l'élément en plaque, le revêtement ne s'étendant alors pas jusqu'à la zone de la surface couverte par le ruban conducteur respectivement la surface partielle, y étant enlevé ultérieurement ou bien une isolation appropriée étant prévue entre le revêtement continu et le ruban conducteur respectivement la surface partielle.

De préférence, on réalisera cependant la surface partielle et le revêtement chauffant de manière homogène, de façon connue en soi, et on séparera la surface partielle ultérieurement par une ou plusieurs lignes de séparation. Il va de soi que le substrat revêtu n'est lui-même pas conducteur.

S'il est prévu au moins deux lignes de séparation parallèles l'une à l'autre entre le revêtement et la surface partielle, il peut être avantageux de diviser la bande étroite revêtue subsistant entre celles-ci en plusieurs parties isolées les unes des autres. Ainsi, on prévient un flux de courant le long de cette bande étroite. Comme isolation, on peut à nouveau utiliser de courtes lignes de séparation transversales.

Dans tous les cas, la surface partielle est, selon l'invention, reliée électriquement de façon unipolaire à un conducteur de protection mis à la terre. De tels conducteurs de protection ("contact de protection") sont la norme connue comme troisième conducteur dans les réseaux électriques domestiques européens.

De préférence, on prévoira une surface partielle mise à la terre sur chaque arête libre de l'élément en plaque le long du bord extérieur de celui-ci. Pour un élément en plaque monté librement, la surface partielle s'étendra de préférence autour de son pourtour extérieur.

Selon une forme de réalisation avantageuse, on prévoira un raccord électrique pour la surface partielle à proximité spatiale des raccords du revêtement chauffant. Ceci permet une réalisation particulièrement simple de l'ensemble des contacts électriques extérieurs de l'élément en plaque.

Bien entendu, on peut - de façon connue en soi - prévoir sur un élément en plaque conforme à l'invention plusieurs chemins de courant, le cas échéant à raccorder indépendamment l'un de l'autre, pour pouvoir au besoin brancher ou débrancher par paliers la puissance de chauffage.

La longueur et la largeur du chemin de courant ou des chemins de courant ainsi que la conductibilité de surface (en ohms par unité de surface) du système de couches utilisé sont déterminantes pour la consommation de puissance électrique et pour la puissance de chauffage de l'élément en plaque. Selon la tension de service disponible ou prédéterminée, on peut régler et homogénéiser différentes puissances de chauffage dans de larges limites par la disposition des chemins de courant. La température maximale admissible dépendra également du domaine d'utilisation de l'élément en plaque terminé. Par exemple, si des contacts directs par l'utilisateur ne sont pas possibles ou envisagés, les températures peuvent alors être nettement supérieures à 50°C. Toutefois, il faut naturellement éviter que des couches adhésives éventuellement collées sur la vitre revêtue, par exemple des films adhésifs d'une vitre feuilletée, soient endommagées par les températures atteintes en service normal.

Une forme de réalisation préférée de l'élément en plaque prévoit que la vitre rigide pourvue du revêtement soit contrecollée sur la surface revêtue avec une autre plaque électriquement non conductrice ou dans tous les cas isolée du revêtement. Dans la région des raccords électriques, il peut être prévu dans un perfectionnement avantageux un évidement dans une des vitres rigides à travers lequel les conducteurs de réseau nécessaires peuvent être conduits.

Un tel élément en plaque est avantageusement utilisé dans des vitrages de fenêtres, ou dans des miroirs, ou dans des appareils de chauffage, ou encore dans des appareils électroménagers nécessitant une production de chaleur en surface.

D'autres détails et avantages de l'objet de l'invention apparaîtront par les dessins d'exemples de réalisation et par leur description détaillée qui suit.

Dans ces dessins, qui sont des représentations schématiques non à l'échelle,
la Figure 1 montre une vue d'un élément en plaque avec un revêtement chauffant et divisé par des lignes de séparation ;
la Figure 2 est une vue agrandie de la région de raccordement de l'élément en plaque selon la Figure 1 ; et
la Figure 3 représente un exemple simple d'un circuit électrique de l'élément en plaque.

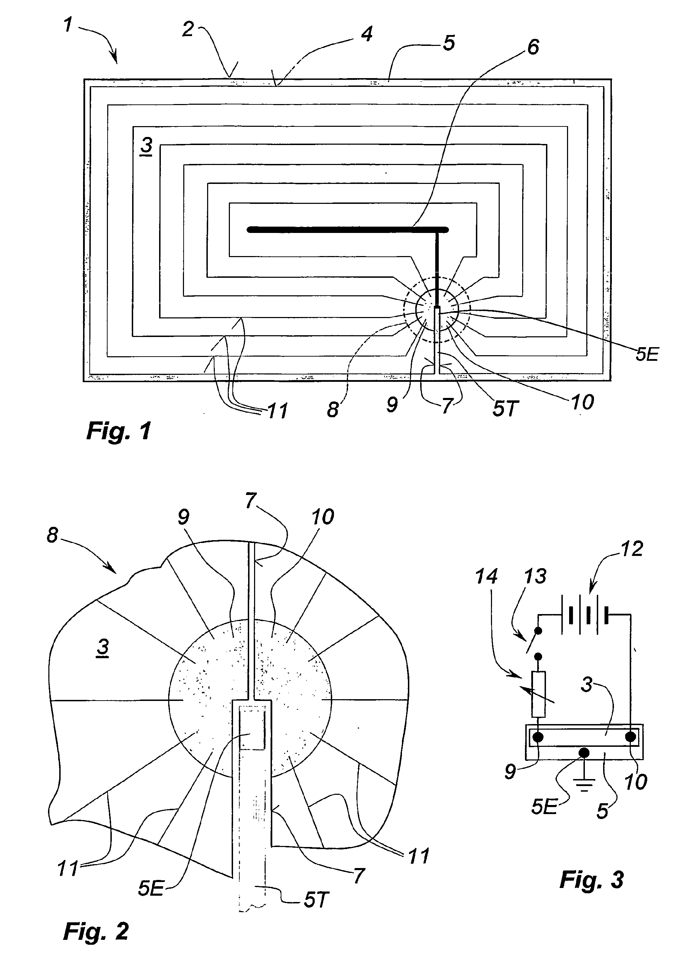

Selon la Figure 1, un élément en plaque 1 comprend une vitre trempée 2, dont une face principale - ici la face supérieure - est couverte d'un revêtement électriquement conducteur complet 3. Le revêtement 3 peut, mais ne doit pas nécessairement être visuellement transparent. De préférence, il se compose d'un système de couches à haute résistance thermique, avec au moins une couche métallique, qui est déposé avant la trempe de la vitre 2.

Le long du bord de la vitre 2 est tracée en périphérie dans le revêtement 3 au moins une fine ligne de séparation 4 à faible distance - 1 à 2 cm - de ce bord. Il peut également être prévu plusieurs lignes de séparation 4 parallèles à faible distance l'une de l'autre. Une bande de bord extérieure périphérique 5 ainsi formée, ici ombrée en gris clair, est électriquement séparée du reste plus grand de la surface revêtue. Elle forme une isolation de bord de l'élément en plaque 1, qui d'une part assure une isolation électrique vers l'extérieur et d'autre part empêche une corrosion du revêtement apparaissant éventuellement au bord extérieur de se propager dans la surface. Au milieu de ladite surface, il est également prévu un champ 6 en forme de ruban, électriquement séparé par des lignes de séparation.

Ce champ ne doit cependant pas se trouver absolument au centre de la surface revêtue, mais il peut être disposé ailleurs qu'au centre en relation avec une disposition appropriée des pistes conductrices actives du revêtement 3. Il ne doit pas non plus être en forme de ruban ou rectiligne, mais il pourrait aussi présenter une forme de surface quelconque ou même une allure coudée ou courbe.

Les lignes de séparation mentionnées jusqu'à présent et dans la suite forment des interruptions à haute résistance électrique dans le revêtement, à travers lesquelles aucun courant ne peut circuler. La bande de bord extérieure 5 est donc entièrement isolée électriquement par rapport au revêtement.

Une branche 5T de la bande de bord revêtue 5 s'étend en un endroit sur une certaine distance dans la surface du revêtement 3. Elle est séparée du revêtement 3 par deux autres lignes de séparation parallèles 7. Elle se termine dans une zone de raccordement 8 (indiquée par un cercle en trait mixte), qui est entourée par le revêtement 3. Les lignes de séparation 7 s'étendent séparément ou sont réunies en une ligne le cas échéant large au-delà de la zone de raccordement 8 jusqu'à un champ séparé 6. Une zone de couche neutre éventuellement enfermée entre les deux lignes de séparation 7 peut au besoin être divisée en parties électriquement isolées les unes des autres.

Il n'est pas absolument nécessaire de mener la branche 5T en ligne droite et à angle droit par rapport au bord de la plaque. On pourrait aussi, au lieu de la bande représentée ici, prévoir une surface plus grande, par exemple un triangle, dont la base se trouve sur l'arête de la plaque et dont le sommet est situé dans la zone de raccordement.

Dans la zone de raccordement 8, il est prévu de part et d'autre des lignes de séparation 7 et de la branche 5T, des électrodes 9 et 10 qui sont chacune en liaison électrique/galvanique avec le revêtement 3. Les électrodes doivent être chacune raccordées à un pole d'une tension électrique, d'une façon non représentée en détail. Un dispositif de raccordement adéquat est décrit dans la demande de brevet antérieure 102 41 728.8, à laquelle il est fait référence ici.

Comme on le voit mieux dans la Figure 2, il est prévu sur la branche 5T une autre électrode 5E. Elle est utilisée pour relier la branche 5T et l'ensemble de la bande de bord à un conducteur de protection. Le raccord nécessaire à cet effet est également situé dans la zone de raccordement 8 et il peut sans difficultés être logé dans le dispositif de raccordement mentionné plus haut, moyennant de légères modifications.

La Figure 3 montre un exemple de circuit symbolique d'un élément en plaque conforme à l'invention. Les électrodes 5E, 9 et 10 sont indiquées comme des points de raccordement. L'électrode 5E reliée à la bande de bord 5 est raccordée au potentiel de terre. Les deux électrodes 9 et 10 raccordées au revêtement 3 - représenté comme une résistance de chauffage - sont reliées à une source de tension appropriée 12. Pour compléter, on a représenté un interrupteur 13 pour brancher respectivement débrancher le courant de chauffage, ainsi qu'un organe de réglage 14 pour régler la puissance de chauffage.

De façon connue en soi, les électrodes sont fabriquées de préférence avec une encre bonne conductrice de l'électricité, résistant à la chaleur et apte à l'impression par sérigraphie. De préférence, cette encre ou cette pâte de sérigraphie présente une très haute teneur en argent. Les électrodes 9, 10 et 5E sont de préférence imprimées avant la trempe de la vitre 2 et cuites pendant le chauffage nécessaire pour la trempe thermique. Si l'on emploie un substrat en matière plastique pour l'élément en plaque, une cuisson n'est naturellement pas possible, ou alors modérément.

Il est en l'occurrence indifférent que les électrodes 5E, 9, 10 soient appliquées sur le revêtement 3 déjà déposé ou que le revêtement 3 ne soit déposé qu'après que les électrodes aient été formées, par exemple imprimées, sur la vitre.

Pour déterminer une allure définie du courant de chauffage à travers la surface du revêtement 3, celui-ci est au total divisé, de façon connue en soi, par un ensemble d'autres lignes de séparation 11 en une série de chemins de courant parallèles, qui s'étendent entre les deux électrodes 9 et 10 et qui sont aussi montées électriquement en parallèle.

Dans un élément en plaque chauffant réel, on prend encore d'autres mesures pour homogénéiser la puissance de chauffage de ces pistes. Ces mesures ne font cependant pas partie de l'objet de la présente invention ; au contraire, on se référera à cet effet à la demande de brevet antérieure 102 59 110.5, qui décrit des mesures possibles.

Des éléments en plaque du type illustré dans les Figures 1 et 2 conviennent par exemple pour un montage dans des vitrages isolants, dans lesquels le cadre d'écartement correspondant doit être collé simplement sur la bande de bord 5. La mise à la terre de cette bande de bord, décrite ici, assure en outre une mise à la terre sûre d'un cadre d'écartement le cas échéant métallique utilisé.

De même, de tels éléments en plaque peuvent être suspendus directement devant un mur ou être intégrés dans celui-ci, sans être pourvus au préalable d'une couverture arrière, s'il est garanti d'une autre manière que la tension électrique de service n'entraîne aucun risque pour les utilisateurs. Enfin, ils peuvent être intégrés sans problèmes dans des vitres feuilletées, dans lesquelles on doit disposer la face revêtue chauffante active à l'intérieur du composite et utiliser une couche adhésive appropriée pour les températures de service.

Les raccords extérieurs de l'élément en plaque peuvent être menés hors d'un tel composite ou hors d'un tel vitrage isolant en principe par une des faces d'extrémité, par exemple sous la forme de pistes conductrices imprimées ou de raccords par bandes plates. Si la zone de raccordement est cependant située dans la surface de l'élément en plaque, on peut aussi prévoir dans une des vitres rigides assemblées un évidement destiné au passage des raccords extérieurs. Dans le cas d'un élément de vitrage isolant, il faut alors veiller en plus à une étanchéité de l'espace intermédiaire du vitrage dans la région de cet évidement, par exemple par un cadre d'écartement annulaire connu en soi.

Les électrodes sont elles-mêmes opaques (par suite de leur haute teneur en matériaux conducteurs comme l'argent et de leur épaisseur sensiblement plus forte par comparaison avec le revêtement lui-même), le cas échéant cependant elles sont visibles par le côté non revêtu de la vitre 2. Elles sont dès lors masquées à la vue, mais elles peuvent aussi former des éléments décoratifs, par exemple - à la différence de la forme semi-circulaire simple montrée dans les dessins - former un logo plat de firme ou de fabricant. En outre, on peut également obtenir certains effets de couleurs en colorant la pâte de sérigraphie conductrice employée de préférence pour fabriquer les électrodes.

## Revendications

1. Elément en plaque (1) avec au moins une vitre rigide (2), en particulier une vitre de verre, qui porte un revêtement électriquement conducteur (3) chauffant par l'application d'une tension électrique par l'intermédiaire de raccords (9, 10) ainsi qu'une surface partielle (5, 5T) électriquement conductrice, électriquement isolée par rapport au revêtement et pourvue d'au moins un raccord électrique propre (5E), **caractérisé en ce que** la surface partielle (5 ; 5T) est prévue pour le raccordement à un potentiel de mise à la terre.

2. Elément en plaque selon la revendication 1, dans lequel la surface partielle (5) déposée sur la vitre rigide (2) avec le revêtement (3) est séparée du revêtement (3) à l'aide d'au moins une ligne de séparation (4).

3. Elément en plaque selon la revendication 2, **caractérisé en ce qu'**il est prévu au moins deux lignes de séparation (4) parallèles l'une à l'autre, et **en ce que** la zone neutre ou libre de potentiel (5) enfermée entre celles-ci est divisée en parties électriquement isolées les unes des autres.

4. Elément en plaque selon la revendication 1, dans lequel la surface partielle(5, 5T) est réalisée séparément du revêtement, en particulier en une autre matière, et est déposée sur la surface de la vitre.

5. Elément en plaque selon l'une quelconque des revendications précédentes, dans lequel la surface partielle (5) se trouve sur le bord extérieur de la vitre (2), en particulier s'étend en forme de cadre autour de la surface chauffante.

6. Elément en plaque selon l'une quelconque des revendications précédentes, **caractérisé en ce que** le revêtement chauffant (3) est réglé sur le fonctionnement avec la tension du réseau national et **en ce que** la surface partielle (5, 5T) est prévue pour le raccordement à un conducteur de protection mis à la terre, en particulier un conducteur de protection de la tension du réseau mis à la terre.

7. Elément en plaque selon l'une quelconque des revendications précédentes, **caractérisé en ce que** le revêtement (3) est formé par un système stratifié à haute résistance thermique, déposé sur sa surface avant la trempe de la vitre (2).

8. Elément en plaque selon l'une quelconque des revendications précédentes, **caractérisé en ce que** des raccords pour l'arrivée de la tension électrique de chauffage dans le revêtement (3) et un raccord relié à la surface partielle (5) sont rassemblés localement dans une zone de raccordement (8).

9. Elément en plaque selon la revendication 1 ou 8, **caractérisé en ce qu'**au moins une électrode plate (5E, 9, 10) est associée à chaque raccord pour la mise en contact électrique de la surface partielle (5) et du revêtement (3).

10. Elément en plaque selon la revendication 9, **caractérisé en ce que** les électrodes (5E, 9, 10) sont réalisées avant ou après le dépôt du revêtement chauffant (3) par application et de préférence cuisson d'une pâte de sérigraphie électriquement conductrice.

11. Elément en plaque selon l'une quelconque des revendications précédentes, **caractérisé en ce qu'**une autre plaque est contrecollée sur la face revêtue de la vitre rigide (2).

12. Elément en plaque selon l'une quelconque des revendications précédentes, **caractérisé en ce qu'**un cadre d'écartement d'un vitrage isolant est collé à la zone de bord de la surface revêtue de la vitre (2), par lequel une autre vitre rigide est solidement assemblée à la vitre (2) portant le revêtement.

13. Elément en plaque selon l'une des revendications 11 ou 12, **caractérisé en ce qu'**il est prévu au moins un évidement dans une des plaques rigides assemblées l'une à l'autre, pour introduire les raccords électriques extérieurs de l'élément en plaque.

14. Elément en plaque selon les revendications 8 et 13, **caractérisé en ce que** l'évidement est prévu en agencement spatial avec la zone de raccordement (8).

15. Elément en plaque selon l'une quelconque des revendications précédentes, **caractérisé en ce qu'**au moins la zone de raccordement (8) est cachée à la vue au moyen d'un masque.

16. Elément en plaque selon la revendication 9, **caractérisé en ce que** les électrodes plates forment des éléments décoratifs visibles.

17. Elément en plaque selon l'une quelconque des revendications précédentes, **caractérisé en ce qu'**il est utilisé dans des vitrages de fenêtres, ou dans des miroirs, ou dans des appareils électroménagers nécessitant une production de chaleur en surface.

## Claims

1. A plate element (1) with at least one rigid pane (2), in particular a pane of glass, which carries an electrically conductive coating (3) that heats by application of an electrical voltage via connectors (9, 10), and also an electrically conductive partial surface (5, 5T) electrically isolated from the coating and provided with at least one suitable electrical connector (5E), **characterized in that** the partial surface (5; 5T) is provided for connection to a ground potential.

2. The plate element as claimed in claim 1, in which the partial surface (5) deposited on the rigid pane (2) with the coating (3) is isolated from the coating (3) by means of at least one separating line (4).

3. The plate element as claimed in claim 2, **characterized in that** at least two mutually parallel separating lines (4) are provided and **in that** the neutral or free potential region (5) enclosed between said lines is divided into parts that are electrically isolated from one another.

4. The plate element as claimed in claim 1, in which the partial surface (5, 5T) is produced separately from the coating, in particular made of another material, and is deposited on the surface of the pane.

5. The plate element as claimed in any one of the preceding claims, in which the partial surface (5) lies on the outer edge of the pane (2) and in particular extends in the form of a frame around the heating surface.

6. The plate element as claimed in any one of the preceding claims, **characterized in that** the heating coating (3) is regulated as regards operation with the national mains voltage and **in that** the partial surface (5, 5T) is provided for connection to a grounded protective conductor, in particular a grounded conductor for protection from the mains voltage.

7. The plate element as claimed in any one of the preceding claims, **characterized in that** the coating (3) is formed by a layered system having a high thermal resistance, deposited on its surface before the pane (2) is toughened.

8. The plate element as claimed in any one of the preceding claims, **characterized in that** connectors for bringing the electrical heating voltage into the coating (3) and a connector connected to the partial surface (5) are grouped together locally in a connection region (8).

9. The plate element as claimed in claim 1 or 8, **characterized in that** at least one flat electrode (5E, 9, 10) is associated with each connector for electrically contacting the partial surface (5) and the coating (3).

10. The plate element as claimed in claim 9, **characterized in that** the electrodes (5E, 9, 10) are produced, before or after the heating coating (3) has been deposited, by applying and preferably baking an electrically conductive screen-printing paste.

11. The plate element as claimed in any one of the preceding claims, **characterized in that** another plate is laminated to the coated face of the rigid pane (2).

12. The plate element as claimed in any one of the preceding claims, **characterized in that** a spacing frame for an insulating glazing unit is bonded to the edge region of the coated surface of the pane (2), via which another rigid pane is firmly joined to the pane (2) bearing the coating.

13. The plate element as claimed in either of claims 11 and 12, **characterized in that** at least one recess is provided in one of the rigid plates joined to each other, in order to introduce the external electrical connectors for the plate element.

14. The plate element as claimed in claims 8 and 13, **characterized in that** the recess is provided in a spatial arrangement with the connection region (8).

15. The plate element as claimed in any one of the preceding claims, **characterized in that** at least the connection region (8) is concealed from view by means of a mask.

16. The plate element as claimed in claim 9, **characterized in that** the flat electrodes form visible decorative elements.

17. The plate element as claimed in any one of the preceding claims, **characterized in that** it is used in glazing for windows, or in mirrors, or in domestic electrical appliances requiring production of surface heat.

## Patentansprüche

1. Plattenelement (1) mit mindestens einer starren Scheibe (2), insbesondere einer Glasscheibe, die eine elektrisch leitfähige, durch Anlegen einer elektrischen Spannung über Anschlüsse (9, 10) beheizbare Beschichtung (3) sowie eine elektrisch leitfähige, gegen die Beschichtung elektrisch isolierte und mit mindestens einem eigenen elektrischen Anschluss (5E) versehene Teilfläche (5, 5T) trägt, **dadurch gekennzeichnet, dass** die Teilfläche (5; 5T) zum Anschluss an ein Erdungspotential vorgesehen ist.

2. Plattenelement nach Anspruch 1, in dem die zusammen mit der Beschichtung (3) auf die starre Scheibe (2) aufgebrachte Teilfläche (5) mithilfe mindestens einer Trennlinie (4) von der Beschichtung (3) abgeteilt ist.

3. Plattenelement nach Anspruch 2, **dadurch gekennzeichnet, dass** mindestens zwei zueinander parallele Trennlinien vorgesehen sind, und dass der zwischen diesen eingeschlossene potentialfreie oder neutrale Bereich in elektrisch gegeneinander isolierte Abschnitte unterteilt ist.

4. Plattenelement nach Anspruch 1, in dem die Teilfläche getrennt von der Beschichtung, insbesondere aus einem anderen Material, hergestellt und auf die Oberfläche der Scheibe aufgebracht ist.

5. Plattenelement nach einem der vorstehenden Ansprüche, in dem die Teilfläche (5) sich am äußeren Rand der Scheibe (2) befindet, insbesondere sich rahmenartig um die beheizbare Fläche erstreckt.

6. Plattenelement nach einem der vorstehenden Ansprüche, **dadurch gekennzeichnet, dass** die beheizbare Beschichtung (3) auf den Betrieb mit der landesüblichen Netzspannung eingestellt ist und dass die Teilfläche (5, 5T) zum Verbinden mit einem geerdeten Schutzleiter, insbesondere mit einem geerdeten Schutzleiter der Netzspannung vorgesehen ist.

7. Plattenelement nach einem der vorstehenden Ansprüche, **dadurch gekennzeichnet, dass** die Beschichtung (3) durch ein vor dem Vorspannen der Glasscheibe (2) auf deren Oberfläche abgeschiedenes, thermisch hoch belastbares Schichtsystem gebildet ist.

8. Plattenelement nach einem der vorstehenden Ansprüche, **dadurch gekennzeichnet, dass** Anschlüsse zum Zuführen der elektrischen Heizspannung in die Beschichtung (3) und ein mit der Teilfläche (5) verbundener Anschluss örtlich in einem Anschlussbereich (8) zusammengefasst sind.

9. Plattenelement nach Anspruch 1 oder 8, **dadurch gekennzeichnet, dass** jedem Anschluss mindestens eine Flächenelektrode (5E, 9, 10) zum elektrischen Kontaktieren der Teilfläche (5) und der Beschichtung (3) zugeordnet ist.

10. Plattenelement nach Anspruch 9, **dadurch gekennzeichnet, dass** die Elektroden (5E, 9, 10) vor oder nach dem Abscheiden der beheizbaren Beschichtung (3) durch Auftragen und vorzugsweise Einbrennen einer elektrisch leitfähigen Siebdruckpaste hergestellt werden.

11. Plattenelement nach einem der vorstehenden Ansprüche, **dadurch gekennzeichnet, dass** auf die beschichtete Seite der starren Scheibe (2) eine weitere Platte auflaminiert ist.

12. Plattenelement nach einem der vorstehenden Ansprüche, **dadurch gekennzeichnet, dass** mit dem Randbereich der beschichteten Fläche der Scheibe (2) ein Abstandhalter-Rahmen einer Isolierverglasung verklebt ist, über welchen eine weitere starre Scheibe mit der die Beschichtung tragenden Scheibe (2) fest verbunden ist.

13. Plattenelement nach einem der Ansprüche 11 oder 12, **dadurch gekennzeichnet, dass** zum Einführen der elektrischen Außenanschlüsse des Plattenelements mindestens eine Ausnehmung in einer der miteinander verbundenen starren Platten vorgesehen ist.

14. Plattenelement nach Anspruch 8 und 13, **dadurch gekennzeichnet, dass** die Ausnehmung in räumlicher Zuordnung zu dem Anschlussbereich (8) vorgesehen ist.

15. Plattenelement nach einem der vorstehenden Ansprüche, **dadurch gekennzeichnet, dass** zumindest der Anschlussbereich (8) mithilfe einer Kaschierung optisch verdeckt ist.

16. Plattenelement nach Anspruch 9, **dadurch gekennzeichnet, dass** die Flächenelektroden als sichtbare, dekorative Elemente ausgeführt sind.

17. Plattenelement nach einem der vorstehenden Ansprüche, **dadurch gekennzeichnet, dass** es in Fensterscheiben, Spiegeln oder Elektro-Haushaltsgeräten benutzt wird, die eine Oberflächenbeheizung erfordern.
